# EUROPEAN PATENT APPLICATION

(11) **EP 4 711 805 A1**
(43) Date of publication of application: **18.03.2026**
(21) Application number: 24200558.5
(22) Date of filing: 16.09.2024
(51) Int. Cl.: G01S 7/03, G01S 13/931, G01S 7/02

(54) **RADAR SYSTEM ON LICENSE PLATE SUPPORT STRUCTURE**

(71) Applicant: Aptiv Technologies AG, 8200 Schaffhausen (CH)
(72) Inventor: VOLLBRACHT, Dennis, 8200 Schaffhausen (CH); KAZIMI, Sadam Hussain, 8200 Schaffhausen (CH); GHASEMIAN, Pedram, 8200 Schaffhausen (CH); BUSCH, Mathias, 8200 Schaffhausen (CH)
(74) Representative: Bardehle Pagenberg Partnerschaft mbB Patentanwälte Rechtsanwälte

(57) **Abstract**

The present disclosure relates to a radar system for automotive application. The radar system comprises a support structure for supporting a license plate. The radar system further comprises a multitude of radar antennas arranged on the support structure. The present disclosure further relates to a vehicle comprising a radar system.

## Description

### Technical area

The present invention relates to a radar system for automotive applications, and to a vehicle comprising such a radar system.

### Technical background

Radar sensors are used in automotive applications (e.g. in motor vehicles such as cars) to provide safety and comfort functions, for example in so-called Advanced Driver-Assistance Systems (ADAS). Recent developments are pushing radar systems to provide high-quality and reliable data which are used by a vehicle's control systems to analyze the environment of the car, to detect possible targets in the vehicle's surrounding, and to take appropriate control measures if necessary.

Front radar sensors, i.e. radar sensors installed in a front part of an automotive vehicle, are usually designed to have very high gain and high resolution at long distances such that they can be used for adaptive cruise control, automatic emergency braking, direction of arrival estimation, lane-changing and/or lang-keeping assistance. Front radar sensors are typically installed behind the front bumper of a vehicle, or in the front vehicle fascia. This can negatively the aerodynamic and aesthetic properties of the vehicle. To increase performance of ADAS, radar sensors with larger physical apertures are desired which achieve higher angular resolution. However, such radar sensors are difficult to fit into front vehicle bumpers or into the front vehicle fascia.

Radar sensors in automotive applications are usually integrated in the outer shell of a vehicle, where they are covered by radomes/bumpers/fascia. The varying material properties of the elements covering the radar sensors can massively influence the radar signal quality and can have a massive negative impact on radar detection performance and accuracy. Also, the radar signal may be attenuated by several dB, which can reduce the overall detection distance of the ADAS. Further, the material properties of molded plastic parts and semi-metallic surface coatings are often heterogeneous, which can lead to unpredictable signal distortions, such as phase distortions of the received signal.

It is thus an object of the present disclosure to provide for an improved radar system for automotive applications, particularly to provide for a radar system for automotive applications with increased angular resolution or sub degree level resolution.

Prior art reference JPH11160426A discloses a car radar fitted at the rear of a license plate. However, an improved radar system is desired which reduces manufacturing costs and facilitates integration into a vehicle. In addition, improved integration of a front radar system is desired.

A solution is provided according to the subject matter of the independent claims.

### Summary of the invention

An aspect of the present disclosure relates to a radar system for automotive applications. The radar system may be used to provide for driver-assistance functionality, e.g. as part of an ADAS.

The radar system comprises a support structure. The support structure may be an integral part of the vehicle's fascia, or may be a separate component which can be mounted to the vehicle's fascia. The support structure (and or a surface thereof) may be configured for supporting one or more further elements of the radar system as described further herein. The support structure may be made of a plastic material, and may be made by injection molding, for example.

The support structure is adapted for supporting a license plate. The support structure may be configured for supporting a front or back license plate. The license plate may be any common license plate, with a size according to national or regional regulations. For example, the license plate may be a (European) license plate according to DIN 74069. The support structure may have suitable elements, such as e.g. clipping elements, for supporting the license plate. By supporting the license plate, the license plate may be fixed to the support structure and thus fixed to the vehicle associated with the support structure.

The radar system comprises a multitude of radar antennas. The radar system may comprise any number or radar antennas, as is convenient for the respective embodiment (e.g. 3, 6, 12, 24, 36 antennas). The multitude of radar antennas may comprise several individual (receiving and transmitting) channels as will be appreciated by the person skilled in the art. The radar antennas may be coupled to a respective control unit and may be configured for performing radar measurements, e.g. in the context driver-assistance functionality. The radar antennas may be implemented as a monolithic microwave integrated circuit (MMIC), or several MMIC. The radar antenna may operate at 77 to 81 GHz, and/or in the 120 GHz band, as will be appreciated by the skilled person. This radar frequency may be particularly advantageous for ADAS applications as will be appreciated by the skilled person. In the 77-78 GHz frequency range, the radar antenna may provide for common (front) radar applications, while the 77 to 81 GHz frequency range may be used for street condition monitoring and for parking applications.

The multitude of radar antennas is arranged on the support structure. The support structure thus supports the multitude of radar antennas. By providing the support structure to the vehicle (or the fascia), the multitude or radar antennas is also provided and aligned towards the desired direction (e.g. forward or backward). The radar antennas may be an integral part of the support structure. The radar antennas may be provided in pre-configured recesses in the support structure.

A first subset of the multitude or radar antennas is arranged along a horizontal direction, and wherein a second subset of the multitude of radar antennas is arranged along a vertical direction. The horizontal direction and the vertical direction may be relating to the orientation when used in automotive applications, e.g. when the support structure is part of a vehicle and supporting a license plate. Each of the multitude of radar antennas may be assigned to the first subset or the second subset, i.e. each of the multitude of radar antennas is either part of the vertically arranged antennas, or of the horizontally arranged antennas. In this manner, the radar system can provide for a high angular resolution. Further, this arrangement of the radar antennas allows for high compatibility of the radar system with differently sized license plates. Since most (if not even all) license plates have a basically rectangular shape, they are compatible and conform to the horizontally and vertically arranged radar antennas.

Preferably, the license plate comprises a license plate. Preferably, the license plate comprises a metal. In a preferred example, the license plate comprises aluminum. The license plate may be supported by the support structure, and may thereby be fixed to the support structure. The license plate may be any license plate corresponding to (national or regional) regulations. For example, the license plate may be a European license plate according to DIN 74069, with a length of 520 mm and a height of 110 mm. Alternatively, the license plate may be a US license plates having a standard license plate size of about 305×152 mm, or a license plate as used in the PR China having a size of 440×140 mm, or a license plate as used in Australia and other pacific rim countries having a size of about 372×135 mm. By arranging the radar antennas on the support structure being sufficiently large to support such license plates, the radar system can provide for improved resolution.

Further preferred, the support structure has a structure larger than the license plate, wherein the multitude of radar antennas is arranged on a peripheral section of the support structure. At least a long edge of the support structure and a short edge of the support structure may not be covered by the license plate. On these edges, the multitude of radar antennas may be provided. This arrangement of the radar antennas may thus be independent from the size of the license plate attached to the support structure. As a consequence, a uniform radar antenna layout can be manufactured and provided during assembly of the vehicle irrespective of the size of the license plate later used. The radar antennas are arranged along the horizontal and vertical direction as described, on a peripheral section of the support structure which may not be covered by the license plate.

Further preferred, the multitude of radar antennas is arranged adjacent to the license plate, and wherein the field-of-view of the radar antennas is free of the license plate. In this manner, the radar antennas are not covered by the license plate, but are rather arranged on the support structure at sections not covered by the license plate, such that the field-of-view of the radar antennas (e.g. facing in the forward driving direction of the vehicle) is not covered by the license plate. This provides for improved resolution of the radar system.

Preferably, the multitude of radar antennas is arranged in an L-shaped configuration. In other words, one end of the horizontally aligned radar antennas may correspond to one end of the vertically aligned radar antennas, such that the alignment of the multitude of radar antennas is L-shaped, with a long edge (e.g. the horizontally aligned antennas) and a short edge (e.g. the vertically aligned antennas) perpendicular to the long edge. Such configuration particularly provides for a universal configuration that can be used with most standardized rectangular license plates.

Preferably, the first subset of the radar antennas is arranged along a horizontal extension of 190-520 mm, further preferred 275-310 mm, further preferred of about 305 mm. Along the horizontal direction, the radar antennas of the first subset may extend over a total length of 305 mm, for example. Such an extension of the arrangement of the antennas of the first subset provides for a large aperture of the radar system, and thus to an improved resolution. Most license plates have a horizontal size of at least 305 mm. Thus, the same horizontal radar antenna configuration can be used for most license plate support structures. This size compatibility leads to reduced costs.

Preferably, the second subset of the radar antennas is arranged along a vertical extension of 80-220 mm, further preferably 100-120 mm, further preferred of about 110 mm. Along the vertical direction, the radar antennas of the second subset may extend over a total length of 110 mm, for example. Such an extension of the arrangement of the antennas of the second subset provides for a large aperture of the radar system, and thus to an improved resolution. Most license plates have a vertical size of at least 110 mm. Thus, the same vertical radar antenna configuration can be used for most license plate support structures. This size compatibility leads to reduced costs.

Preferably, the first subset of radar antennas comprises radar antenna receivers and wherein the first subset of radar antennas is preferably free of radar antenna transmitters. Preferably, the second subset of radar antennas comprises radar antenna transmitters and wherein the second subset of radar antennas is preferably free of radar antenna receivers. Accordingly, the transmitters may be arranged on the vertical axis, while the receivers may be arranged on the horizontal axis. As the vertical axis is typically smaller than the horizontal axis, a larger number of receivers than transmitters can be arranged on the support structure. For example, the first subset of radar antennas may be 16 radar antenna receivers, and the second subset of radar antennas may be 8 radar antenna transmitters. The 16 radar antenna receivers may be arranged horizontally over a length of 305 mm, and the 8 radar antenna transmitters may be arranged vertically over a length of 110 mm. As will be appreciated by the skilled person, such configurations may provide for beneficial MIMO characteristics.

Preferably, the first subset of the radar antennas and the second subset of the radar antennas are arranged on a frame of the support structure configured for enclosing the license plate. Further preferred, the frame of the support structure is of rectangular shape and defining a recess sufficiently dimensioned to receive the license plate. Further preferred, the frame comprises a fixation mechanism adapted for fixing the license plate to the support structure and for releasing the license plate from the support structure. The frame may be made of a plastic material. The frame may be sized and dimensioned such to receive and fix a license plate. For example, a license plate may be inserted into the frame and fixed thereto by means of a clipping mechanism. By arranging the radar antennas on the frame, the radar antennas are well secured to the support structure and the functionality of the radar antennas is not impaired by the license plate. The radar antennas may be provided as a single component during manufacture of the support structure, with such dimension that it can be used with support structures of different size (for supporting differently sized license plates). This reduces costs.

Further preferred, the first subset of the radar antennas and the second subset of the radar antennas are arranged at least partially within the frame of the support structure. For example, the radar antennas may be provided in pre-configured recesses in the frame of the support structure. The antennas may be fully enclosed by the frame, i.e. they may be located within the frame material. For example, during the manufacture of the frame (e.g. by injection molding), the antennas may be inserted into the frame material. Later on, as the frame may be made of a material transparent to the radar signals, the functionality of the radar antennas is not unduly impaired, while the radar antennas are protected from environmental protected from environmental or external weather exposure.

Preferably, the support structure is made of plastic. The support structure may be made by injection molding. The plastic material may be chosen such that the functionality of the radar antennas is only marginally impaired. During the manufacturing process of the support structure, the radar antennas may be incorporated into the support structure. For example, the radar antennas may be provided as a single component into the manufacturing process of the support structure. This single component may be designed such that it can be used with variously sized support structures.

Another aspect of the present disclosure relates to a vehicle comprising a radar system as described herein. The vehicle may be any kind of (motor) vehicle, such as a passenger car, truck, bus, motorcycle, or a railed vehicle, watercraft, etc.

### Description of preferred embodiments

In the following, the disclosure will be described with reference to the attached figures. In the figures, similar elements are provided with the same reference signs.
Fig. 1 illustrates a vehicle according to an embodiment;
Fig. 2 illustrates a radar system according to another embodiment;
Fig. 3 illustrates a radar system according to another embodiment;
Fig. 4 illustrates a radar system according to another embodiment.

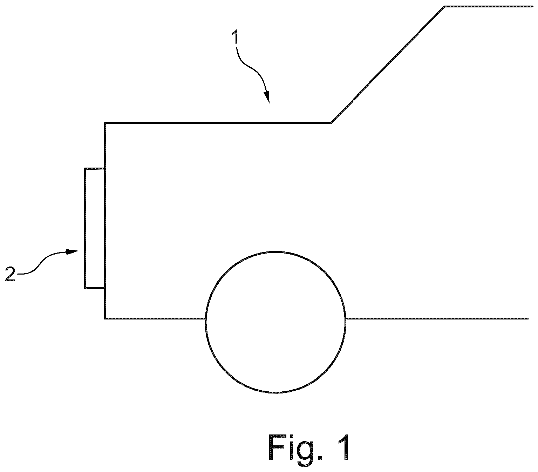

Fig. 1 illustrates a vehicle 1 according to an embodiment of the present disclosure. The vehicle 10 may be any type of vehicle, for example a passenger car. The vehicle comprises a radar system 2 at the vehicle's front. The radar system 2 comprises a support structure and radar antennas as described herein.

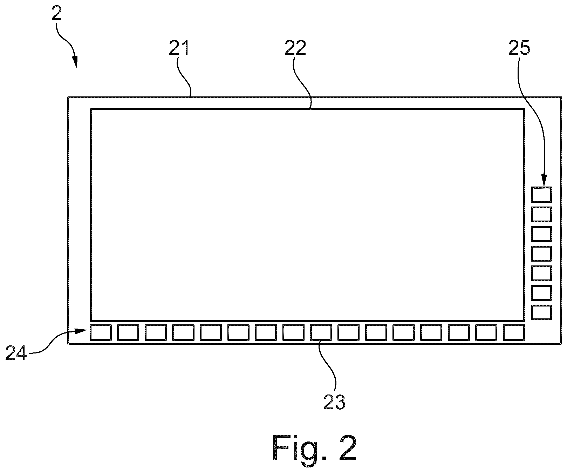

Fig. 2 illustrates a radar system 2 according to another embodiment of the present disclosure. The radar system 2 may correspond to that illustrated in Fig. 1. The radar system 2 comprises a support structure 21 which may be fixed (e.g. by screws) to the vehicle's fascia. The support structure 21 is dimensioned as configured to support a

license plate 22 made of aluminum. The support structure 21 thereby fixes the license plate 22, as required by national/regional regulations. For example, the license plate 22 may be fixed to the support structure by means of a common clipping mechanism. The license plate 22 has a size of about 305 × 152 mm, in line with US regulations.

The radar system 2 further comprises a multitude of radar antennas 23. In the embodiment of Fig. 2, the radar system 2 comprises 24 radar antennas 23. The radar antennas 23 are arranged on the support structure 21. The radar antennas 23 may be incorporated into the support structure 21. All the radar antennas 23 may form a single component which is introduced into the support structure 21 during manufacture thereof.

In the embodiment of Fig. 2, the radar antennas 23 are divided into two different subsets 24, 25. The first subset 24 of radar antennas 23 is arranged along a horizontal direction. The second subset 25 of the radar antennas 23 is arranged along a vertical direction. The first subset 24 is formed of 16 radar antenna receivers. The second subset 25 is formed of 8 radar antenna transmitters. The radar antennas 23 may provide for MIMO functionality, as will be appreciated by the skilled person.

In the embodiment of Fig. 2, the first subset 24 or radar antennas extends over a horizontal length of 305 mm. The second subset 25 of radar antennas extends over a vertical length of 110 mm. The two subsets of radar antennas generally provide for a L-shaped form of the radar antenna arrangement.

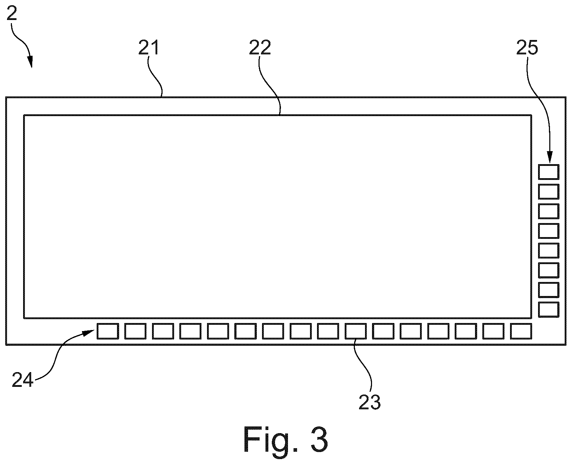

Fig. 3 illustrates a radar system 2 according to another embodiment of the present disclosure. The radar system 2 of Fig. 3 basically corresponds to that of Fig. 2. Contrary to the embodiment of Fig. 2, the license plate 22 of the embodiment of Fig. 3 has a size of 440 × 140 mm, in line with the regulations of the PR China. Accordingly, the size and configuration of the support structure 21 is adapted to the size of this license plate 22. The setup and the arrangement of the radar antennas 23 is similar to that of the embodiment of Fig. 2: The 24 radar antennas 23 are divided into two subsets 24, 25 of 16 radar antenna receivers (first subset 24) and 8 radar antenna transmitters (second subset 25). Again, the first subset 24 or radar antennas extends over a horizontal length of 305 mm, and the second subset 25 of radar antennas extends over a vertical length of 110 mm.

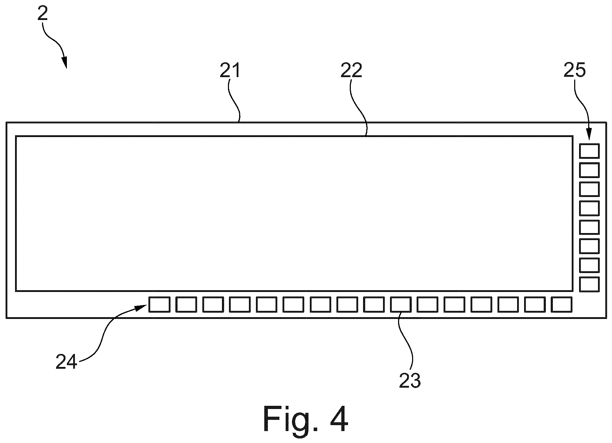

Fig. 4 illustrates a radar system 2 according to another embodiment of the present disclosure. The radar system 2 of Fig. 4 basically corresponds to that of Fig. 2 or Fig. 3. Contrary to the embodiment of Fig. 2 or Fig. 3, the license plate 22 of the embodiment of Fig. 3 has a size of 520 × 110 mm, in line with the regulations of DIN 74069. Accordingly, the size and configuration of the support structure 21 is adapted to the size of this license plate 22. The setup and the arrangement of the radar antennas 23 is similar to that of the embodiments of Fig. 2 or Fig. 3: The 24 radar antennas 23 are divided into two subsets 24, 25 of 16 radar antenna receivers (first subset 24) and 8 radar antenna transmitters (second subset 25). Again, the first subset 24 or radar antennas extends over a horizontal length of 305 mm, and the second subset 25 of radar antennas extends over a vertical length of 110 mm.

The uniform size of the radar antenna arrangement allows for placing the radar antenna component into license plate support structures of different size. The arrangement of the radar antennas in the proposed manner allows for increased angular resolution or sub degree level resolution of the radar system, with no interference from the (differently shaped) license plates, and high compatibility with differently shaped/sized license plate support structures.

## Claims

1. A radar system (2) for automotive application, comprising:
a support structure (21) for supporting a license plate (22);
a multitude of radar antennas (23) arranged on the support structure (21);
wherein a first subset (24) of the radar antennas (23) is arranged along a horizontal direction, and wherein a second subset (25) of the radar antennas (23) is arranged along a vertical direction.

2. The radar system (2) of claim 1, further comprising a license plate (22), wherein the license plate (22) preferably comprises a metal, particularly aluminum.

3. The radar system (2) of claim 2, wherein the support structure (21) has a structure larger than the license plate (22), wherein the multitude of radar antennas (23) is arranged on a peripheral section of the support structure (21).

4. The radar system (2) of claim 2 or 3, wherein the multitude of radar antennas (23) is arranged adjacent to the license plate (22), and wherein the field-of-view of the radar antennas (23) is free of the license plate (22).

5. The radar system (2) of any one of claims 1-4, wherein the multitude of radar antennas (23) is arranged in an L-shaped configuration.

6. The radar system (2) of any one of claims 1-5, wherein the first subset (24) of the radar antennas (23) is arranged along a horizontal extension of 190-520 mm, preferably 275-310 mm, further preferred of about 305 mm.

7. The radar system (2) of any one of claims 1-6, wherein the second subset (25) of the radar antennas (23) is arranged along a vertical extension of 80-220 mm, preferably 100-120 mm, further preferred of about 110 mm.

8. The radar system (2) of any one of claims 1-7, wherein the first subset (24) of radar antennas (23) comprises radar antenna receivers and wherein the first subset (24) of radar antennas (23) is preferably free of radar antenna transmitters.

9. The radar system (2) of any one of claims 1-8, wherein the second subset (25) of radar antennas (23) comprises radar antenna transmitters and wherein the second subset (25) of radar antennas (23) is preferably free of radar antenna receivers.

10. The radar system (2) of any one of claims 1-9, wherein the first subset (24) of the radar antennas (23) and the second subset (25) of the radar antennas (23) are arranged on a frame of the support structure (21) configured for enclosing the license plate (22).

11. The radar system (2) of claim 10, wherein the frame of the support structure (21) is of rectangular shape and defining a recess sufficiently dimensioned to receive the license plate (22).

12. The radar system (2) of claim 10 or 11, wherein the frame comprises a fixation mechanism adapted for fixing the license plate (22) to the support structure (21) and for releasing the license plate (22) from the support structure (21).

13. The radar system (2) of any one of claims 10-12, wherein the first subset (24) of the radar antennas (23) and the second subset (25) of the radar antennas (23) are arranged at least partially within the frame of the support structure (21).

14. The radar system (2) of any one of claims 1-13, wherein the support structure (21) is made of plastic.

15. A vehicle, comprising a radar system (2) according to any one of claims 1-14.
